(19)

Europäisches
Patentamt
European
Patent Office
Office européen
des brevets

(11)  **EP 2 187 254 A1**

(12)  **EUROPEAN PATENT APPLICATION**

(43) Date of publication:
**19.05.2010  Bulletin 2010/20**

(51) Int Cl.:
*G02F 1/1334* (2006.01)    *H01S 3/063* (2006.01)
*H01S 3/213* (2006.01)

(21) Application number: **08169354.1**

(22) Date of filing: **18.11.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Fraunhofer-Gesellschaft zur Förderung
der
angewandten Forschung e.V.
80686 München (DE)**

(72) Inventors:
• **Sakhno, Oksana
14169 Berlin (DE)**

• **Stumpe, Joachim
14641 Nauen (DE)**
• **Schrader, Sigurd
10405 Berlin (DE)**
• **Ksianzou, Viachaslau
12435 Berlin (DE)**

(74) Representative: **Leonhard, Frank Reimund
Leonhard - Olgemöller - Fricke
Patentanwälte
Postfach 10 09 62
80083 München (DE)**

(54)  **Electrically switchable optical grating having DFB laser properties, a DFB laser containing
same, and a production method therefor**

(57)    The present invention is directed to a structure, having first areas consisting of or comprising a network of organic polymer material and second areas consisting of a nematic and/or smectic liquid crystal material, comprising at least one or more nematic and/or smectic liquid crystals and a photoluminescent material, wherein the first and second areas alternate in at least a first plane, while the composition of the film is substantially invariable in at least one direction which is angular to the said first plane, or second areas are completely surrounded by first areas, and the said areas are located in a periodic pattern, wherein the nematic and/or smectic liquid crystal material in the second areas extends in the longitudinal direction of the said areas from one end of the area to the other, the structure being arranged between two substrates, at least one of which is light transmitting. The structure together with the substrates may be a Bragg grating and can be used as a DFB laser. It can be prepared by providing a homogeneous and isotropic mixture including a photocurable monomer/oligomer, a nematic and/or smectic liquid crystal, and a photoluminescent material, filling said mixture into the space between two substrates and irradiating same with a light field such that areas of the mixture are irradiated while others are not. Under the irradiation, the mixture separates into areas comprising photocured polymer and areas consisting or comprising liquid crystals and photoluminescent material.

Figur 2a

## Description

The present invention is directed to new structures, based on a polymer-liquid crystal grating comprised of alternating stripes or planes of polymer network and aligned liquid crystal material, arranged between two parallel and preferably light transmitting substrates, which are able to emit light on excitation corresponding to the absorbance of photoluminescent material contained therein and which therefore can also be used as organic distributed feedback laser. The invention provides novel photopolymerizable starting materials for single-step formation of active volume periodic structures with both diffractive and light-emitting properties. These materials are homogeneous mixtures of a liquid crystal material, one or more monomers which are susceptible to photopolymerization, optionally a photoinitiator and a phoshoresencent/fluorescent material. Suitably treated, they form a light-scattering-free electrically tunable light-emissive thin-film device which acts under optically excitation pumping as light-emissive periodic volume structure or as organic DFB laser.

Description of Prior Art

1. H-PDLC Systems and holographic optical elements

In information display applications, the use of portable and micro-displays, combined with virtual display technology is creating the need for complex optical systems in very compact, lightweight packages. However, if combined with conventional refractive and reflective optics, the devices become relatively heavy and cumbersome. Switchable holographic optical elements (HOEs) have been invented to fulfil the promise of diffractive optics in meeting the technological challenges in telecommunications and information display. Multi-layered switchable holographic optical elements in a single solid-state device form a substitute for multiple static elements and complex refractive/reflective optical systems. This dramatic innovation has prompted one technology developer to coin the phrase "an optical system in a chip" as an apt description of switchable HOEs.

Typical holographic photopolymers do not have an electro-optical nature which can be exploited for real time control of their optical properties. Once the hologram is fixed, its optical characteristics cannot be changed. But to increase the hologram efficiency due to high refractive index (RI) contrast along with lower optical losses is still an important task. Thus, it is seen that there is a need for materials that can record volume holograms with properties that can be controlled electrically or thermically or with the aid of light. Liquid crystals have long been utilized in the prior art for their ability to change their optical orientation in the presence of an electric field. Additionally, liquid crystals can dramatically increase the diffraction efficiency of a volume hologram of which they are a part. Together, these properties offer the very desirable possibility of electrically switching the diffraction efficiency of volume holograms for use in a wide variety of optical information processing and display applications. To be successful, switchable hologram technology must present a flexible approach to optical element design and fabrication, offering high efficiency and optical quality with low power consumption. For example, devices in telecommunications applications that require specific wavelength and format considerations include reconfigurable add/drop switches, multiplexers, optical cross connects, optical switches, wavelength selectors and tuners, and spectral attenuators or gain flatteners. Among pure organic devices suitable for such tasks, holographically generated diffractive gratings made from polymer-LC materials, holographic polymer-dispersed liquid crystals (H-PDLCs), are the most famous. As the reactive monomers are photo-cured, the liquid crystals separate out forming a distinct micro- or nano-droplet phase (in H-PDLC and nano-H-PDLC), see e.g. T.J. Bunning , L.V. Natarajan, V.P. Tondiglia, R.I. Sutherland, Ann. Rev. Mater. Sci., 30, 83 (2000); G. P. Crawford, Opt. Photonics News 14, 54 (2003); R.L. Sutherland, V.P. Tondiglia, L.V. Natarajan, T.J. Bunning, Appl. Phys. Lett. 79, 1420 (2001). This phase separation occurs as the pre-polymer is irradiated with an interference pattern. If a photopolymerizable polymer-liquid crystal material is irradiated with light in a suitable pattern, a holographic transmission or reflection one-dimensional (or 2D or 3D) grating can be made inside the cured film comprising regions of cured polymer and regions containing a high amount of LC droplets.

Although the easy fabrication and the ability to control their diffraction efficiency by electrical field are promising for dynamic applications of HOEs, typical H-PDLC have some drawbacks.

First of all, there is a strong light-scattering because of the presence of LC-droplets, the dimension of which is mostly comparable with the light wavelength. The inability to make an electrically switchable volume hologram that can be switched at voltages less than 100 volts has been a particular deficiency in the prior art in that lower voltages are necessary to be compatible with conventional display and information processing technology. Power dissipation leads to joule heating, which in some cases can cause problems with thermal stability. Also, large power consumption requires a more expensive electrical power supplier and possibly larger voltages, which may lead to electrical shorting that destroys the usefulness of the hologram. This depends largely on the switching voltage of the hologram. High switching voltage leads to large current drawn from the power supply. In switchable PDLC gratings, power consumption and dissipation comes from current drawn to charge up the transparent electrodes, as well as from resistive heating in the transparent electrodes and through the hologram, due to a finite conductivity of the PDLC material. The value of the polymer-LC interface also plays a big role for the driving voltage value. Nano-HPDLCs which are characterized by an almost complete absence of the light-scattering (they have the size of LC-droplets less than 100nm) have, on the other hand, a much higher driving voltage, compared to typical H-PDLC. Switching speed requirements of the optical elements depend on the intended application ranging from microseconds to milliseconds. It is useful to have the ability to tailor the switching speed to the application in order to optimize other parameters, such as switching voltage. So, high switching fields (about 15V/$\mu$m, especially for nano-H-PDLC) and time response in order of milliseconds are incompatible with telecom applications.

The above mentioned shortcomings can be overcome by a uniform stripe-like grating morphology characterized by alternating planes of polymer and LCs. Until now, two types of such polymer-LC gratings have been developed: The first one is namend POLICRYPS (POlymer-LIquid CRYstal-Polymer Slices) (University of Calabria, Italy), see WO 2005/006065 to R. Caputo et al. ; and G. Abbate, F. Vita, A. Marino, V. Tkachenko, S. Slussarenko, O. Sakhno, J. Stumpe. Mol. Cryst. and Liq. Cryst., 453, 1 (2006)) and the second one is named POLIPHEM (see Fraunhofer IAP, Potsdam, Germany, J. Stumpe, S. Slussarenko, O. Sakhno, High-efficient tunable and switchable optical elements based on polymer-liquid crystal composite and method for their fabrication, WO2006/002870, O. Sakhno, S. Slussarenko, J. Stumpe, Proc. SPIE, 5521, 38 (2004), and G. Abbate, F. Vita, A. Marino, V. Tkachenko, S. Slussarenko, O. Sakhno, J. Stumpe. Mol. Cryst. and Liq. Cryst., 453, 1 (2006). Both types of structures are formed from a homogeneous mixture of prepolymer and liquid crystals as H-PDLC. Both prototypes are thin, lightweight, low-electrical-power elements. The fabrication of switchable holograms by the photopolymerization-induced phase separation of liquid crystal ("LC") material from an initially homogenous pre-polymer mixture has been discussed in commonly owned US Patent 5,942,157 and G. Abbate, F. Vita, A. Marino, V. Tkachenko, S. Slussarenko, Ol Sakhno, J. Stumpe, Mol. Cryst. And Liq. Cryst., 453, 1 (2006). In POLIPHEM case, the pre-polymer mixture prior holographic exposure may consist of a mixture of multifunctional monomers or mixture of multi-functional monomers of differing functionality, e.g. a thio-ene plus acrylate monomers, combined with nematic LC, along with other ingredients, as far as required, e.g. a photoinitiator dye. The initial mixture is homogeneous and isotropic. Holographic recording process has also been described, taking place at room conditions employing a single step exposure method wherein coherent laser beams combine to form an interferogram in the plane of the pre-polymer mixture. As the system cures, the LC phase separates from the polymer network to form the hologram, comprised of alternating sequences of the planes of homogeneously planar aligned LCs and isotropic polymer. The material of the POLICRYPS system, in contrast, requires increased temperature in order to become a homogeneous mixture that can form an volume non-scattered grating upon holographic irradiation.

2. DFB Lasers

In recent years, LC-based photonic band gap materials have received considerable interest for light-emissive applications. With the existence of a band gap, it is possible to achieve lasing with use of proper active substance (laser dye) and pumping source, see J.P. Dowling, M. Scalora, M.J. Bloemer, C.M. Bowden. J. Appl. Phys. 75, 1896 (1994). Generally saying, DFB lasers employ a periodic structure, typically a corrugated slab or grating known as a distributed Bragg diffraction grating within a gain medium to achieve single frequency operation. The grating is designed such that light of a particular wavelength will be reflected constructively. This is known as Bragg reflection. Lasing occurs at this particular wavelength, the Bragg wavelength, with diffraction losses preventing other modes from lasing. It is understood that as used herein, "distributed feedback" or "DFB" lasers refer to distributed Bragg reflector (DBR) lasers, as well.

The lasing wavelength is connected with the period of Bragg-grating as:

$$\Lambda = m\, \lambda_{las}/2n, \qquad \text{(Eq. 1)}$$

where A is the period of the grating; m is the integer order of the grating; $\lambda_{las}$ is the Bragg wavelength (the lasing wavelength); and n is the effective refractive index of the material, see H. Kogelnik and S. V. Shank, Appl. Phys. Lett., 18, 152 (1971). One way to alter the operating wavelength of a DFB laser is to change the period of the grating. For example, a 0.8 nm wavelength separation in 1.55 $\mu$m DFB lasers corresponds to a grating period difference of 0.13 nm. Such fine control over grating pitch manufacture has been demonstrated by holographic and contact printing techniques. In the holographic technique, resists are exposed using two interfering UV laser beams, and then etched. See, for example, Pakulski et al., "Fused silica masks for printing uniform and phase adjusted gratings for distributed-feedback lasers," Appl. Phys. Lett. 62(3), 222-24; Okuda et al., "Monolithically integrated GalnAsP/InP Distributed Feedback Lasers," Fourth Int'l Conf. Integrated Optics and Optical Fiber Comm., Tokyo, Japan, paper 28B1-4; US 4,517,280 (Okamoto et al.).

DFB lasers can be tuned by amending their temperature. However, a temperature tuning is a cumbersome measure the equipment for which will in a number of cases not be available or will be prohibit the intended use of the laser, e.g. in medical applications.

3. Lasers using liquid crystal materials

Dye-doped LC-based materials exhibit large optical gain over broad spectra in vis range. LC can be electrically or thermally tuned; so they are suitable for use as tunable lasers. The most familiar LC-based lasing medium is the cholesteric LC with helica structure, a 1D-photonic crystal (PhCs), which has been extensively investigated, see US 3,771,065 (to Goldberg et al.); V.I. Kopp, B. Fan. H.K.M. Vithana, A.Y. Ganack, Opt. Lett. 23, 1707 (1998); A. Chanishvili, G.Chilaia, G. Petriashvili, R. Barberi, R. Bartolino, G. Cipparone, M. Mayyulla, L.Oriol, Adv. Mater. 16, 791 (2004) and T.-H. Lin, Y.-J. Chen, C.-H. Wu, A. Y.-G. Fuh, J.-H. Liu, P.-C. Yang, Appl. Phys. Lett. 86, 161120 (2005).

Diffractive optics is a response to many of current demands. These devices are monochromatic by their nature. Multi-wavelength and dynamic reconfiguration capabilities are forcing a reconsideration of the use and fabrication of diffractive optical elements to satisfy the growing needs of the information revolution. Having a laser that operates at multiple wavelengths would be advantageous for a variety of applications in the fields of medicine, material processing applications such as cutting and welding, remote sensing, communications, measuring systems and holography, etc. When two different wavelengths are required, two separate laser devices are employed until now. However, the cost associated with the purchase and maintenance of two separate laser devices is generally prohibitive. To avoid the purchase of two laser devices, one solution is to use the same basic hardware but change the laser rod, mirrors and power supply when it is necessary to change operating wavelengths.

Below there is an overview of the DFB structures obtained holographically in different monomer-LC composites.

G. Strangi and co-workers in "Color-Tunable Organic Microcavity Laser Array Using Distributed Feedback", Physical Review Letters 94, 063903 (2005) describe an array of organic, color-tunable microlasers which are intrinsically phase locked. Dye-doped cholesteric (helixed) liquid crystals are embedded within periodic, polymeric microchannels sculptured by light through a single-step process (POLYCRIPS-structure in monomer-cholesteric LC). The grating is a transmission grating with $5\mu m$ period, wherein dye-doped helixed LC materials are embedded between polymer. The helical superstructure is oriented along the LC microchannels; the microchannels behave as a miniaturized mirrorless cavity laser. The laser emissions emerge parallel to the glass plates and along the microchannels direction. The lasing action in this system is obtained due to the diffraction on the helix pitch of the cholesteric liquid crystal material situated between the polymer walls (Bragg reflection of pumping light on the pitches of the LC helix as feed back system, i.e. the lasing effect exists in each LC line along the direction of the grating planes). The intensity of the lasing emission can be reduced to about 25-30% by application of an electric field (sinusoidal voltage between 0 and $50V_{rms}$; 1 kHz) perpendicular to the helix axis. Temperature control of the lasing wavelength was obtained by changing the temperature thereof in the range between 25°C and 80°C.

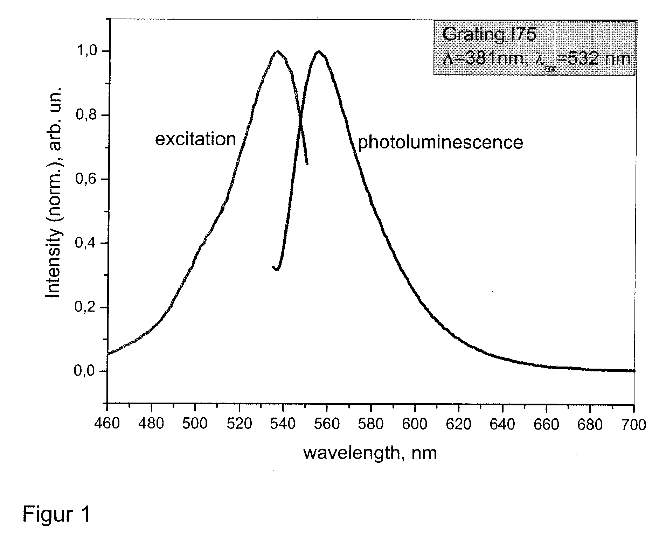

Another system is based on lasers comprising H-PDLC structures. Bunning and co-workers observed laser emission from dye-doped H-PDLC reflection gratings (R. Jakubiak , T.J. Bunning, R. A. Vaia, L.V. Natarajan, V.P. Tondiglia. Adv. Mater. 15, 241 (2003)), which was subsequently followed by D.E. Lucchetta, L. Criante, O. Francescangeli, F. Simoni, Appl. Phys. Lett. 84, 837 (2004). The said reflection gratings (e.g. 1 D PhC, period of 163 nm, see Jakubiak et al. above) consist of alternating layers of LC domains, having about 150 to 200 nm size (see Fig. 1a of this paper); they were prepared starting from a formulation containing a nematic liquid crystal, a photo-initiator, a chain extender, fatty acid and dipentaerythritol penta/hexa acrylate monomer. The mixture was filled into a cell which was exposed for 30 sec to two laser beams that impinged on either side of the cell, creating a reflection holographic grating- The cell was opened, and the laser dye was added, dissolved in a suitable solvent. Laser emission at optical pumping at 355 nm was obtained. The scattering losses due to the presence of LC contributed to a 10% reduction in transmission. The feed-back system of theses lasers is based on the difference between the refractive indices of polymer material and the planes which are enriched in liquid crystal material.

The lasing action from dye-doped H-PDLC transmission gratings and its electrical switching-on/-off was also investigated recently, see V. K. Hsiao, Ch. Lu, G. S. He, M. Pan, A. N. Cartwrite, P. N. Prasad, R. Jakubiak, R. A. Vaia, T.J. Bunning. Opt. Expr.,13, 3787 (2005); Y.J. Liu, X.W. Sun, P. Shum, X.H. Yhang, H.P. Li, J. Mi, W. Ji, J. Appl. Phys., Part 2 45, L559 (2006). Compared to reflection grating, the transmission grating allows obtaining a longer gain length, due to the possibility of lateral pumping without increasing the grating thickness (that in turn can cause light-scattering) which facilitates low threshold lasing with narrow line-width, but the diffraction efficiency of the grating does not exceed 35% due to low concentration of LC. The lasing is obtained due to Bragg reflection of pumping light on the fringes of the polymer/PDLC-grating (as feed-back system). This transmission grating was prepared using a pre-polymer syrup consisting of nematic LC, photo-initiator, chain extender, dipentaerythritol penta-/hexa acrylate monomer and Pyrromethene 580 as the lasing dye. The grating was obtained using the interference of two coherent s-polarized laser beams from a 514 Ar ion laser source. The lasing threshold was of about 300 $\mu J$, and an electrical switching could be observed at 30V/$\mu m$ driving voltage whereby the diffraction efficiency was changed from 35 to about 10%. In order to reduce the light-scattering in DFB-structure, the LC concentration used was lowered below the optimal LC concentration at which a maximum diffraction efficiency (DE) could be expected since. High LC concentrations in H-PDLC structures result in a high light scattering on the long period of the DFB geometry, and this increases the lasing threshold value and leads to a widening of the lasing spectral width. At lower LC concentrations, the volume fraction of the LC lamellas decreases, and the LC droplets become smaller. However, the refractive index modulation (efficiency of the feed-back structure) is lower, and consequently, a higher pumping intensity is required which causes a higher lasing threshold.

In Y.J. Liu, X.W. Sun, P. Shum, H.P. Li, J. Mi, W. Ji and X.H. Zhang, Low-threshold and narrow-linewidth lasing from dye-doped holographic polymer-dispersed liquid crystal transmission gratings, Applied Physics Letters 88, 061107 (2006), a H-PDLC transmission grating prepared from trimethyllolpropane triacrylate, N-vinylpyrrolidone, photoinitiator, octanoic acid, 34% of nematic liquid crystal and a lasing dye, dissolved in the prepolymer mixture, is presented with a lasing threshold of ca. 120$\mu$m/pulse. The mixture was sandwiched in an cell made from two ITO coated glass plates. Like the previously mentioned materials, the mixture was illuminated with a holographic pattern, obtained by interference of two beams. Thermal switching of the lasing emission occurs due to a changing in refractive index modulation (at 30°C). Upon adjustment of the LC concentration down to ca. 20 wt%, a threshold value of about 5$\mu$m/pulse ($\lambda_{pump}$=532 nm) could be obtained (see Y.J. Liu, X.M.Sun, H.i. Ellim, W.Ji, Effect of LC concentration on the lasing properties of dye-doped holographic polymer-dispersed LC transmission gratings. Appl. Phys. Lett. 90, 011109 (2007)). However, light scattering problems can be found in this system as well: while high LC concentrations would be advantageous in order to achieve a lasing emission with better performance (sufficient refractive index modulation), only 20% LC by weight could be used in order to avoid light scattering problems (see page 3, left column).

2D- and 3D gratings (2D- and 3D PhC) can provide stronger coupled electro-magnetic bands, compared to 1 D structures that lead to low group velocity dispersion over a wide range of wave vector and consequent local field enhancement, which favour low lasing threshold values and narrower lasing spectral width. A much better lasing performance has been reported in 2D-square-lattice H-PDLC PhCs compared to 1 D PDs in the same material, see R. Jakubiak, V.P. Tondiglia, L.V. Natarajan, R. L. Sutherland, P. Lloyd, T.J. Bunning, R.A. Vaia, Adv. Mater. 17, 2807 (2005).

Although the lasing properties can be improved in 2D- or 3D-structures, there is a high demand to provide grating systems having even 1 D structures with better lasing and tuning performances.

Therefore, it is an object or problem of the present invention to provide new structures which are able to emit light on excitation corresponding to the absorbance of a photoluminescent material contained therein. Further, the invention shall provide an organic DFB laser (organic laser material) based on these structures having improved properties, relative to the above mentioned laser materials and DFB-structures. Specifically, the organic laser shall have low or no light scattering and a low lasing threshold. Moreover, it is an object or problem of the invention to provide respective starting materials and methods to obtain the said structures.

This problem or object is solved by providing a structure, the structure being arranged between two parallel substrates and having first areas consisting of or comprising a network of organic polymer material and second areas consisting of a nematic and/or smectic liquid crystal material, comprising at least one or more nematic and/or smectic liquid crystals and a photoluminescent material, wherein

> (a) the first and second areas alternate in at least a first plane, while the composition of the structure is substantially invariable in at least one direction which is angular to the said first plane, or
> (b) second areas are completely surrounded by first areas, and the said areas are located in a periodic pattern,

wherein the nematic and/or smectic liquid crystal material in the second areas extends in the longitudinal direction of the said areas from one end of the area to the other.

The structure has usually a flat shape, e.g. it is in the shape of a film or plate.

In a first alternative, the first and second areas may alternate perpendicular to the plane of the substrates, e.g. to give a transmission grating, which in a second alternative, the first and second areas may alternate parallel or slanted to the plane of the substrates, e.g. to give a reflection grating. In the areas which contain nematic and/and or smectic liquid crystal material, the LC material extends in the longitudinal direction of the area from one end thereof to the other, without being separated by organic polymer material. "Longitudinal direction" in this connection means the longitudinal axis of the respective are, i.e. perpendicular through the film plane or the plane of the substrates for the first alternative and parallel to the film plane or the plane of the substrates for the second alternative.

The present invention is also directed to a holographic distributed feed-back (DFB) laser which can electrically be switched or tuned. In these embodiments, the above mentioned structure is preferably transparent and has the geometry of a grating, wherein the first and second areas alternate, e.g. in the form of stripes, or wherein second areas are comprised by the first areas in two directions, in both cases the second areas extending through the full length or width through the structure. Thus, the grating can have a 1 D or 2D geometry, and in rare cases it can even have a 3D geometry. The grating has preferably a spacing period and thickness which allows its use as a Bragg grating. Volume transmission and reflection gratings with minimal periodicity $\lambda/2$ and in the reflection mode $\lambda/2n$, where $\lambda$ is the wavelength of holographic exposure, can be achieved. The grating is located (sandwiched) between two substrates, e.g. sheets, plates or films, at least one of which, preferably both, are transparent for light. More preferably, the film is sandwiched between a pair of transparent plates or films which may (but do not need to) carry transparent electrodes on their surface, e.g. glass plates or transparent plastic films and ITO electrodes. Thus, the structure encased between the substrates may be rigid or flexible.

The structure or grating thickness is preferably about 1-100 $\mu$m, more preferably 4 to 50 $\mu$m and most preferably 5 to 20 $\mu$m.

In case the substrates are provided with electrodes, the lasing emmision can be switched on-off under the application of an electrical field to the said electrodes. Moreover, operating wavelength of the laser can be also electrically tunable in a proper spectral range. Accordingly, the invention provides multiple wavelength operation forming a single laser device, without changing any of the hardware components thereof.

The H-PDLC gratings of the prior art as mentioned above consist of alternating polymer areas and LC material areas, wherein in the LC material areas, the LC material is dispersed in the form of droplets, enclosed in a remaining network of polymer. The droplets are separated by the polymer network, which results in the fact that light scattering occurs. In contrast, the gratings of the present invention are constructed such that in the "second areas", e.g. those "stripes" of the Bragg grating wherein liquid crystal material is present, the liquid crystal material continuously extends in the longitudinal direction from one end of the area to the other. The inventors have surprisingly found this change in the micromorphology of the grating, namely from polymer-dispersed-LC to alternating polymer and LC continuous planes, as outlined above, to result in strong improvements of the grating-based laser cavity performances. Firstly, this improvement lies in a higher diffraction efficiency due to better separation of polymer and LCs, and secondly, in much lower light-scattering losses due to the absence of LC-droplets having a size which is comparable to the wavelength of light used. Thirdly, strong improvements of the grating-based laser cavity performances occur. Finally, this improvement lies in a lower switching and tuning voltage due a minimal interface between the polymer and LC-areas that approaches the value of voltage to the similar value obtained for pure LCs in LCD and strong alignment of the LC molecules perpendicularly to the polymer-planes (along the grating-vector). In the typical line-type gratings of the invention, the diffraction of the wide-band emitted photoluminescent light on the periodicity of polymer- and LC-lines as multiply mirrors (distributed feed-back system) is used, in contrast to Strangi et al., see above. Using nematic LCs with positive dielectric permittivity ($\varepsilon$>O) in subwavelength gratings (lower than 400nm) allows rotating the LC directors along the electrical field direction, that can change the intensity of lasing up to a complete switching-off the grating, due to a change in the refractive index of the LC material relative to the refractive index of the polymer matrix (if the refractive index of LCs changes from value of extraordinary [$n_e$~1.7], follows the direction of applied field up to the ordinary refractive index [$n_0$~1.51] and matches closely with the polymer matrix) or allows tuning of the emitted wavelength in a proper spectral range due to the above equation. Another advantage of binary line-type droplet-free micromorphology lies in the fact that the light-scattering losses which increase the lasing threshold and the FWHM (Full Width at Half Maximum) of the lasing-lines in structures with microdroplets, are largely depressed and therefore much lower in the structures of the present invention. A lasing threshold of below 25 $\mu$J, preferably of below 20 $\mu$J and even more preferable of below 10 $\mu$J can easily be obtained; in specific embodiments, even a threshold of 0.1 to 1 $\mu$J could be observed for a transversive pumping wavelength of 532 nm. The FWMH obtained by the structure of the invention lies usually in the range of 0.5 to 1.0 nm. Transversive pumping (vertical pumping, onto the grating surface) of the 1D-transmission grating allows obtaining a long gain medium length, obtaining sufficient feed-back by using a large number of grating periods even with sufficiently low modulation of refractive index (light sees the grating as reflective grating); lower lasing threshold and driving voltage and a large number of microresonators allows obtaining very narrow lasing line. Using the active media with different PL band, lasing in proper spectral ranges and with desirable tuning range can be obtained.

Thus, relative to the micromorphology of H-PDLC structures, the absence of a droplet dispersion gives a number of attractive advantages: the novel structures are transparent in both states, the electrically reoriented one and the electrically non-reoriented one. A lower electric field is required to change the LC orientation and higher values are achievable for the refractive index difference $\Delta n$ between adjacent grating planes. The grating planes show sharp boundaries, and the time-response upon switching is shortened. The realization of a line-type non-droplets grating morphology (due to avoiding of nematic phase transition and LC-droplets formation) can be obtained by both a proper control of the material formulation (type, curability mechanism, concentration of the monomers, types and concentration of the LCs and photoinitiators) and a suitable holographic irradiation intensity which provides the optimal rates of photopolymerization and diffusion of the components to obtain almost complete separation of the LCs from the polymer and their alignment. The resulting gratings possess very high diffraction efficiency ($\eta$) and negligible low light-scattering.

The holographic organic volume Bragg gratings or DFB laser systems of the present invention are moreover favourable, due to their cheapness, easily processability and flexibility (material formulation and optical patterning procedure) but also due to the ability to tune the lasing wavelength dynamically, changing the effective refractive index of the medium through the application of electrical voltage. This allows using only one grating the period of which corresponds to the average line of possible generating spectral region (on the slope of the PL band) and thus avoiding the substitution of any part of the laser device. On the other side, application of the complete switching voltage to the grating allows fading of the lasing up to its complete disappearance. The material allows single-step recording of volume holographic gratings the diffractive and emissive properties of which can be electrically controlled.

Due to the planar alignment of the LCs in LC-lines, $\eta$ of the resulting transmission gratings have a strong dependency on the light-polarization ($\eta_p \approx 99\%$, $\eta_s \approx 1-2\%$ is obtainable). This feature can be useful in proper application when the capability to control the polarization dependence of the grating is necessary. Electrical control of the LC director orientation in the LC-planes changes $\Delta n$ and results in a switching and tuning possibility of the grating diffraction properties. Since in such gratings the LCs in LC-areas exist not in the form of micro- or nanodroplets but as a continuous phase with usually sharp boundaries between polymer and LC-areas, this provides a minimal interface between the polymer and LC-areas that in turn allows decreasing in the driving voltage and shorter switching time compared to analogue values for H-PDLC or nano-H-PDLC. The structures or films of the present invention can be realized as transmission 1D-gratings having maximal diffraction efficiency (for $p$-polarized light) in vis (up to 100%) and ca. 40% in IR spectral range, negligible light-scattering in both electrically off- and all on-states, low driving voltages (less than 10V/$\mu$m normally ca. 2-5 V/$\mu$m), fast time-response (ca. 30-100 $\mu$sec) and high switching contrast. Thus, one possible application of the Bragg-gratings containing optical gain substances inside (for example- 1 D transmission or reflection type - 1 D photonic band gap-PBG) is the use of them as a distributed feed-back structure to obtain the lasing effect.

It is a feature of the present invention that a very clear and orderly separation of LCs with laser dye from cured polymer results, so as to produce high quality holographic gratings, comprising from polymer-planes and LC-planes with dissolved optically active substance.

The liquid crystal material can electrically or thermally be controlled so that the structures of the invention are suitable for use as tunable lasers, in a proper spectral range. Accordingly, the invention provides multiple wavelength operation by a single laser device, without changing any of the hardware components thereof. Volume transmission gratings made with the new polymer-LC material can further electrically be switched between the states possessing of about 100% and about 0% diffraction efficiency, by application of an electrical field to the electrodes possible present on the substrates. Driving voltages of around 2 V/$\mu$m can be achieved. The materials in accordance with the present invention can be used to form 1 D-or 2D- (and rarely 3D) gratings for laser resonator. The optical pumping of the grating with appropriate laser light can give the emission of coherent light with the wavelength in photoluminescent (PL) band of the active substance. Adjustment of the material content and the grating parameters provides the electrically switchable (on-off) / tunable (wavelength) thin-film lasing elements emissive in desirable spectral region. Applications for a new type of tunable organic DFB lasers include telecommunications, bioindustry, sensorics.

In a specific embodiment, substrates are used which are flexible. The film or grating will then also be flexible. If the structure within (and with) the substrates is bend, or is extended or bulged, this implies mechanical stress to the film or grating which may alter the length or width of the grating period or may change other properties thereof. Using such a mechanical stress, a mechanical tuning of the laser wave length is possible.

The present invention also provides a material for the preparation of the above structures / DFB lasers. The starting material of the present invention is a homogeneous, isotropic mixture, containing nematic or/and smectic liquid crystals, one or more organic monomers or pre-polymers which are susceptible to photopolymerization or otherwise photocurable and one or more photoluminescent, preferably fluorescent substances or materials, selected from organic laser dyes and photoluminescent inorganic nanoparticles (quantum dots) and further comprising a photoinitiator, if required or desired for photopolymerization of the photocurable monomers and/or oligomers/pre-polymers. The material may consist of the said components, or it can include additional components, e.g. a solvent, a plasticizer, a surfactant, a co-initiator or the like.

The liquid crystal material is preferably of positive dielectric permittivity ($\epsilon > O$), but of course, liquid crystal materials having a negative dielectric permittivity are also suitable for selected cases.

Absolute and relative amounts of the components can be selected according to the respective requirements. In general, the second component (liquid crystal material) will be present in approximately 20-45 wt %, relative to the sum of the first and the second component, and the first component (monomers/oligomers) will be present in about 80-55wt %, relative to the sum of the said components. The amount of the photonitiator, if present, is approximately 1-2wt% in respect to the monomer/oligomer content. The amount of the fluorescent material (laser dye or fluorescent, usually inorganic semiconductor nanocrystals (quantum dots)) is usually in the range of 0.01-5 wt.-%, relative to the full amount of the starting material.

Suitably treated, the mixture of the present invention is converted into a structure, preferably a Bragg grating, having lasing properties. The starting material is preferably homogenous and isotropic at room temperature (20 to 25°C) or even below; in other cases, instead, it will be homogeneous and isotropic only if warmed up to higher temperatures (around 25-80°C). The mixture is converted into the structure or grating, according to a number of methods. One important method comprises the following steps:

(a) providing a homogeneous and isotropic mixture, comprising at least a first component, consisting of one or more photocurable monomers and/or oligomers, a second component, consisting of one or more nematic and/or smectic liquid crystals, a third component, selected from one or more photoluminescent or fluorescent substances or materials, and further comprising a photoinitiator, if required or desired for photopolymerization of the photocurable monomers and/or oligomers,

(b) filling said mixture into the space between two substrates, optionally with a spacer of a proper thickness inbetween, at least one of the substrates or both being actinic light transmitting, this step preferably being performed within the same temperature range which is used for providing the homogenous and isotropic mixture, and

(c) irradiating at least one surface of the mixture with a light field of actinic light in such a way that areas of the mixture are irradiated while others are not or substantially not, the irradiation being performed within the same temperature range as in steps (a) and possibly (b) and having an intensity sufficiently low that under the irradiation, first areas being solely, or mainly composed of photocured polymer form, while the nematic and/or smectic liquid crystals and photoluminescent or fluorescent material, dissolved therein, at least partly escape into second areas wherein they are not separated by polymer material, the said areas forming a structure or grating as defined above.

Should the structure be intended to be used for other purposes than as a Bragg grating / DFB laser, it will not necessarily be prepared between two substrates, but possibly as a film on one substrate only, or the second or both substrates are removed after preparation.

For preparing the structure according to (c) above, irradiation can be performed using at least two or more monochromatic, coherent beams of actinic light that are angular to each other so that an interfering pattern is obtained. The light beams may penetrate through the substrates and into the film from the same or from opposite sides to form a periodic refractive index structure in the volume of the film (holographic recording). The light intensity pattern formed is applied to the cell to induce photopolymerization and phase separation in the material. If more complex structures are to be obtained, e. g. for 2D or 3D gratings, even 3 or more laser beams can be used. Alternatively, irradiation is made with a homogeneous light field in combination with a specific amplitude or phase mask resulting in an interference pattern as well. Upon irradiation, the liquid crystal separates as a distinct phase of LC and laser dye aligned in periodic channels between the polymer walls forming the phase hologram.

The irradiation with an inhomogeneous light field of actinic radiation (holographic recording) has also been described in WO2006/002870 in detail, taking place at room conditions and employing a single-step exposure method wherein two coherent laser beams combine to form an interferogram in the plane of the pre-polymer mixture. Irradiation of the mixture of the present invention is performed using the same measures, or by irradiation with a homogeneous light filed, using a mask. As the system of WO 2006/002870 cures, the LC phase separates from the polymer network to form a structure which in most cases is a hologram, comprised of alternating planes, stripes or channels of homogeneously planar aligned LCs and isotropic polymer. Curing of the system of the present invention may result in a Bragg grating which includes the required photoluminescent or fluorescent material such that it will be sufficient to transform the incident light photons into a beam of coherent wavelength of only one wavelength and high intensity, and providing a distributed feed-back structure, designed as geometrically desired, for the said photons.

The holographic photopolymerization (photopolymerization with an interferogram of light) of the monomer-doped LC material allows formation of a feedback system and optical gain distribution in one step. This technique allows to easily change the spatial period and geometry of the grating. So, the period of DFB structure can be tuned according to the position and width of the photoluminescent band of the active medium (laser dyes, photoluminescent NP) to satisfy the above equation, and at the same time, the lasing wavelength can be also changed in a certain spectral range. This is a static method of the lasing wavelength tuning.

Thus, the present invention further provides a method to control the lasing wavelength of the laser in the range of amplification band of the optical gain material, which can preferably controlled by the angle of the interference writing pattern (period of the grating). The pumping energy must be sufficient to cause lasing of a proper lasing wavelength satisfying Eq. 1. For each grating period, a specific lasing wavelength will be obtained, as long as no tuning (thermally, electrically) is performed.

In accordance with the present invention the reactive mixture formulation can be easily selected (type and concentration of the LCs and laser substance (dye, nanoparticles, NP) along with the nature, content and curability of the photocrosslinkable part of the material (monomers and photoinitiators) that allows controlling the optical properties of the gratings: average refractive index (RI) of the mixture (important for $\lambda_{las}$), PL position, PL quantum yield, temperature- and photo-stability.

As outlined above, the films of the present invention are obtained by forming a homogeneous, optically isotropic film on a substrate or between two substrates, the film being prepared from a homogeneous and isotropic, photocurable mixture, containing or consisting of the materials mentioned above. The initial mixture should be selected such that an optically clear, non-scattering isotropic film of good quality can be formed which contains a relatively high amount of LC. In a first embodiment of the invention, homogeneity of the initial mixture should be present at least in a temperature range of about 15-25°C. The same applies for the requirement that the film is optically isotropic. In a second embodiment of the invention, homogeneity of the mixture is obtained at elevated temperatures.

The mixture mentioned above can be made by selecting the starting material from those disclosed in WO 2006/002870, mentioned above, and adding a photoluminescent fluorescent material to this mixture, prior to irradiation. Mixtures of WO 2006/002870 are selected such that they are homogeneous and optically clear at room temperature, usually within a temperature range of at least between 20 to 25°C, more preferably of at least between 15 and 25°C. Accordingly, the step of irradiating the mixture is generally performed at room temperature or even below. Alternatively, the mixture, made of comparable components in general, is selected such that it is not yet homogeneous at room temperature, but is converted into a homogeneous, optically clear mixture when heated to elevated temperatures. This is e.g. the case with the materials disclosed in WO 2005/006065, mentioned above. This mixture can be made homogeneous by raising the temperature, and consequently, has to be irradiated at such a temperature, whereupon the composition has to be slowly cooled. Both types of structures - without fluorescent material - are known to be formed from a mixture of pre-polymer and liquid crystals which needs to be homogeneous and isotropic. The films obtained with both starting materials and methods are prototypes of gratings which are thin, lightweight, low-electrical-power elements.

The advantage of those materials which can be irradiated at room temperature, compared to those which must be irradiated at higher temperatures, lies in the fact that formation of the grating micromorphology takes place during a short-time holographic exposure at room temperature without any post-exposure step. This avoids equipment and energy. Examples for such mixtures are mixtures of multi-functional thiol-ene and acrylate monomers, combined with nematic/smectid LC/LCs, along with auxiliary ingredients, as far as required, e.g. a photoinitiator dye.

In order to obtain such a homogeneous, isotropic mixture, the two major components of the photocurable mixture, the photopolymerizable component and the nematic or/and smectic liquid crystal component, should be completely miscible when provided at the above mentioned temperature range of about 15-25°C and will normally be combined in the said temperature range. This means that the proportion of the photocurable monomers and/or oligomers will be selected such that they "dilute" the LC component in such a way that liquid crystalline properties and phase separation of the mixture are suppressed. It results an initially homogeneous, non-scattering layer of completely soluble components. In specific, but exceptional cases, mixing may take place above the said temperature, in case no phase separation will occur upon cooling to the above mentioned temperature. It is preferred that the mixture contains the photocurable monomer(s)/oligomer(s) and the liquid crystal(s) in high, substantial amounts.

It is moreover preferred that the ratio of the components is chosen such that the liquid crystal component is not far from the isotropic-non-isotropic phase transition, e.g. that already small loss of energy or changes of chemistry would re-establish the (preferably nematic, but also possibly other, for example smectic) phase of the IC by phase separation.

In principle, monomers and/or oligomers useful for the photopolymerizable component can be selected without limitation, as long as the monomer(s)/oligomer(s) is/are photopolymerizable and its mixture with the LC or LC mixture will be homogeneous and isotropic at the selected temperature range. Therefore, the said monomers and/or oligomers (mainly selected from aliphatic molecules) should of course be themselves isotropic. It is preferred to use relatively polar educts, in order to provide surface forces within the mixture that are just too low and just not sufficient to provoke a phase separation of the mixture with the liquid crystals. However, this is not a mandatory measure since miscibility with the nematic LC or LC mixture may be properly adapted with the aid of additives, e.g. surfactants or the like, as known in the art. The monomers and/or oligomers can be (and will be in most cases) pure organic molecules, but in some cases, they may instead or in addition comprise "hybrid" inorganic-organic molecules, e.g. organically modified silanes.

In one specific and important embodiment of the invention, the monomer(s) or oligomer(s) used for the present invention will reach their gelation point under polymerization only after at least about 30% thereof have been reacted, preferably only after about 50% monomer-polymer conversion degree, and more preferably, only after about 70% to 80% monomer-polymer conversion degree, the percentage being on a molar basis.

On the other hand, it should be kept in mind that the method of the present invention will be most effective if photocrosslinking is performed such that a dense network is obtained. The dense network formation increases the liquid compound separation, resulting in areas enriched with this component (LC) and, finally after nematic ordering of LCs, macroscopically aligned liquid crystalline phase areas and between said areas polymer network areas are formed in which the reactive monomers are enriched and polymerized. It is to be noted that the said process will take place under environmental temperature conditions.

Under consideration of the above, It is preferred to use compounds having at least one C=C double bond. The said or at least one of the C=C double bonds may be part of a so called Michael system, e.g. containing the fragment C=C-C=O. Alternately or in addition, so called thiol-ene combinations wherein a thiol compound is added to a compound having a C=C double bond, and/or compounds having epoxy groups may be used. The said combinations are preferred due to the fact that the gel point is only reached after a substantial amount thereof has been reacted. More preferably, a mixture of monomers and/or oligomers having a different number of double bonds is used, even more preferably together with one or more thiol compounds.

One example is pentaerythritol tetrakis (3-mercapto) propionate, which may be added to a C=C-containing compound, e.g. a vinyl compound. Further, photocurable components normally used as adhesives and containing different thiol-ene monomers and oligomers in combination with acrylate compounds, e.g. Norland NOA®-61,65,68,81, can be used. The proper selection will result in such a mixture which is initially homogenous, but which under the polymerization conditions will undergo a process of phase separation, separating the liquid crystal component from the growing polymer network, by which the morphology of the resulting structures is attained. Use of thiol-ene polymerizable components is favorable, due to their specific photopolymerization kinetics. This is because the combination of step-growth and free-radical reaction between multifunctional aliphatic thiols and vinyl monomers containing "ene" groups result in a late "gelation - point". Moreover, most of the double bonds are consumed while the precursor is still liquid. Due to these features, it is possible to compose the photopolymerizable mixture exclusively, essentially or substantially from the photopolymerizable component, the nematic liquid crystal component and the laser dye only, without the addition of auxiliary components, e.g. surfactants, and to arrive at a two-phase structure as detailed above, upon proper irradiation as described.

The second component of the material of the present invention is a nematic and/or smectic liquid crystal (LC) component. This component allows the electro-optical response of the resulting structures. Selection of a proper LC or LC mixture for the photocurable mixture is not critical. The liquid crystals may be used alone or in admixture with other components as known from the art.

The concentration of LC utilized should be selected such that on one hand, it is sufficiently high to allow a significant phase separation of the mixture upon irradiation, but should not exceed the amount beyond which PDLC structures might be formed which, as outlined above, are opaque and hazy. If the liquid crystal component is present in an amount below 20% by weight of the prepolymer mixture or polymerizable mixture, a rather weak difference of the refractive indices in the first and second areas will occur upon irradiation at room temperature, even if a full phase separation occurs, and consequently, diffraction efficiency would be low. On the other hand, if the LC component is present in an amount of more than 45% by weight, the product will mostly become highly scattering, and its diffraction efficiency and transmittance decreases. Thus, it is preferred to incorporate the LC component in a proportion of 25 to 45% by weight, in relation to the weight of the prepolymer mixture, and more preferably in a proportion of approximately 35-40% by weight. Such mixtures typically result in a grating which shows high diffraction efficiency, optical clarity and good electro-optical parameters.

The third component is a photoluminescent, in most cases a fluorescent substance ("laser dye"). This substance is selected under materials soluble in the LC material and specifically synthesized and modified photoluminescent/fluorescent nanoparticles (nanocrystals) (Quantum dots). These materials (especially organic laser dyes are frequently used), are known in the art of laser techniques.

The laser dye should have a good solubility in the LC mixture and should preferably (but not necessarily) have a rod-like shape to achieve a good alignment of the dyes in the LCs, as far as it is not selected under nanoparticles. The amount should be selected such that efficient photoluminescence is obtained, without quenching effects. Laser dyes and liquid crystals should be compatible to achieve comparable diffusion properties. Under illumination, the non-reactive laser dyes are supposed to diffuse to the dark areas, as the liquid crystals do. At least, part of the laser dye (or the nanoparticles, respectively) is found in the areas containing liquid crystal material after illumination.

Amplified stimulated emission (ASE) and lasing in systems containing quantum dots (QDs) (like CdSe, CdSe/ZnS) have been reported during last years. (V.I. Klimov, Color-selective semiconductor nanocrystal laser, Appl. Phys.Lett., 2002, v.80, No,24, pp. 4614-4616.). QDs have some advantages compared to traditional organic laser dyes, because they tend to posses low resistance to photobleaching, narrow absorbtion profiles and amission spectra that tail to red. QDs have some specific properties which are attractive to use them instead typical laser dyes in such laser devices. QDs have broad absorption profile and high quantum yield and narrow band of emission. The position of the last is determined by the size of QDs. In directly holographically fabricated polymer-LC DFB laser systems, they have not been reported until now.

Other components may be added to the mixture, as far as required or desired, for example a surfactant.

As far as the polymerizable mixture requires a photoinitiator for starting polymerization, the sensitivity of the prepolymer materials to illumination light is determined by the presence of such a photoinitiator and its concentration. Type and concentration of photoinitiator will be selected considering the irradiation wavelength required or desired and the compounds to be polymerized. In this context, the expression "photopolymerizable" is used to include not only the possibility of polyaddition, but also of polycondensation, and the expression "photopolymerizable compound" or "photopolymerizable mixtures" shall encompass any compound having one or more functional groups which participate in the curing of the polymer matrix. Photoinitiators are activated by irradiation with actinic light and free active radical formation. Free radicals created usually start the polymerization process. Conveniently, photoinitiators to be employed, if necessary or desired, are commercially obtainable substances.

It has been found that the best results in respect to the quality of the final devices, their diffraction efficiency and their electrooptical behaviour were achieved using an initiator amount of 0.5-2 % by weight and a coinitiator in an amount of up to 2-3 % by weight.

Other favourable features of the starting components, alone and in relation to each other, can be derived from the disclosure of WO 2006/002870.

All components are mixed together by suitable means (e. g. ultra-sonification). The thus obtained starting mixture is a homogeneous optically transparent blend. The mixture is filled into the space between two usually parallel substrates, of which at least one should be light transmitting. The substrates may be held apart from each other in a controlled manner by the use of common spacers.

In most cases, a relatively low exposure intensity will be used for irradiation of the homogeneous mixture, through the light transmitting substrate(s), in order to obtain the structure or film of the invention, the specific value of which will be selected dependent on the materials employed (mainly reactivity of the polymerizable component and its concentration or, rather, concentration of the polymerizable groups), as known to a skilled artisan, but of course is also interdependent on other factors, e.g. the kind and concentration of polymerization initiator and time of irradiation. The intensity is selected such that it will ensure a relatively low photopolymerization rate of the local monomers/oligomers present in the bright regions of the inhomogeneous light field. On the other hand, a dense polymer network should be obtained. As a consequence, the LC molecules and the dye, and also possibly a minor part of polymerizable material, e.g. monomers or smaller oligomers, may diffuse from the bright regions to the dark regions which-results in a more or less complete phase separation of the initial mixture. The driving force for the formation of a periodic volume structure into initially liquid monomer-diluent (LCs) is believed, according to literature, to be based on built-in concentration gradient of monomer inside the initial film during the local photopolymerization process, which induces the diffusion of monomer to the bright region on the illumination pattern. Subsequently, diluent (or the LC) molecules counter-diffuse to the dark region of the pattern.

Efficiency of the grating (refractive index modulation) or volume periodic structures is increased with the growth of the segregation of polymer and LCs, which is determined by their thermodynamic compatibility and kinetic parameters of the polymerization process and diffusion segregation of the components. The diffusion process will not limit the rate of the hologram recording, which (in such mixtures) is determined by the rate of polymerization.

The intensity of the illuminating light should be sufficiently low to provide a not very fast crosslinking of monomers in bright regions and to allow a maximal segregation of LCs from these areas. On the other hand, upon low illumination intensity (which gives a low relative contrast of the illumination pattern) the rates of polymer conversion into bright and dark regions will become almost equal, which can slow down the rate of diffusion mass-transport and decreases the segregation degree. Moreover, relatively high intensity in the bright regions (and a sufficiently high contrast of the pattern) is required to form a dense polymeric network in the said regions. Besides, the efficiency of the diffusion mass-transport and final grating efficiency is dependent on the period of structure. Thus, all points mentioned above should be taken into account to adjust the illumination conditions.

For example, if the basic mixture contains thiol-ene polymerizable components, an irradiation intensity of from about 0.1 to 200 mW/cm$^2$, preferably 0.1 to 100 mW/cm$^2$ with UV actinic light, depending on the concrete material and the efficiency of phase separation, may be used. More preferably, the intensity does not exceed 80 mW/cm$^2$ and is even more preferably in the range of about 20 to 50 mW/cm$^2$.

If the intensity of irradiation exceeds an upper limit beyond which the polymerization rate is too high to allow monomers to sufficiently diffuse from the growing polymer network, the formation of PDLC structures are observed. These PDLCs are characterized by much stronger light-scattering and by the absence of anisotropy after the fabrication step.

Examples

The following materials were used:

> Polymerizable monomer: NOA-68 (Norland) (UV adhesive) - 65wt%
> Liquid crystal material : 5CB (K21) (Merck, Darmstadt) - 35wt%
> UV photoinitiator: Irgacure 1700 (Ciba-Geily) 1.4 wt-% (relative to the polymerizable monomer)
> Laser dye: pyrromethene 567 (Exciton) 2 wt-% (relative to the liquid crystal material)

All the components were mixed together at a temperature of about 50°C and stirred for 2 h. After that, the mixtures was cooled to room temperature. The mixture can be stored for 1 month without that a change of properties would be observed. A small amount of the mixture was placed into a cell between two glass substrates with transparent ITO electrodes on the surfaces. The thickness of the cell was about 12-15 $\mu$m.

Holographic exposure was done using the follow conditions:

2-beam transmission geometry
recording wavelength was 364 nm
recording intensity was 3-6 mW/cm$^2$
exposure time was ca. 200s.
working temperature was about 21°C

The grating period was adjusted to the PL of Laser Dye at the excitation of 532 nm, substituting and average refractive index of the material n, diffraction order suitable for the lasing m=2 in the above equation 1, see **Figure 1,** which illustrates the photoluminescence of the laser dye in the grating. The lasing experiment was conducted using a Nd:YAG pulse laser, Q-switch, doubled frequence, $\lambda$= 532 nm beam diameter 6mm, pulse duration $\tau$= 8 ns, pulse frequence v= 10Hz, maximum pulse energy 300$\mu$J.

Transverse pumping: vertical, the pumping beam falls perpendicularly to the grating surface. After the lasing threshold is reached, the emitted light goes from the edges of the grating perpendicularly to the grating planes.

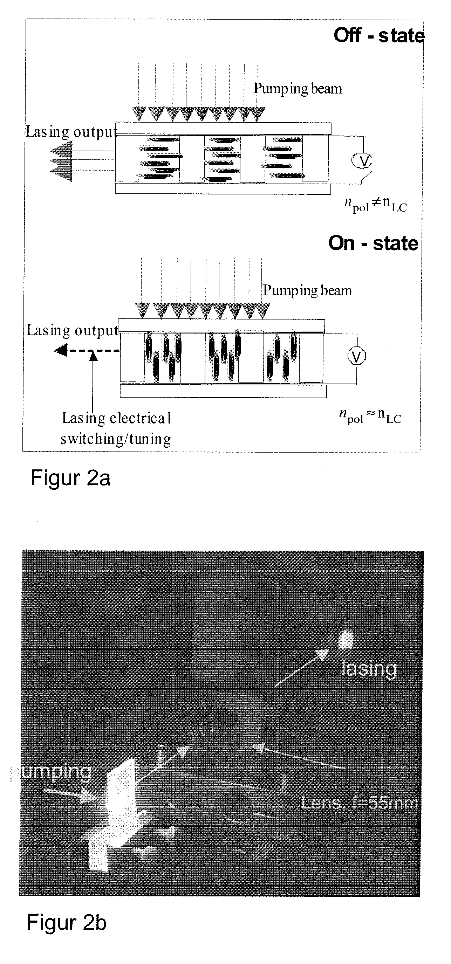

**Figure 2** refers to this experiment: Figure 2a is a schematic setup of the lasing experiment, Figure 2b is a photo of the lasing light, using a lens with F=55mm)

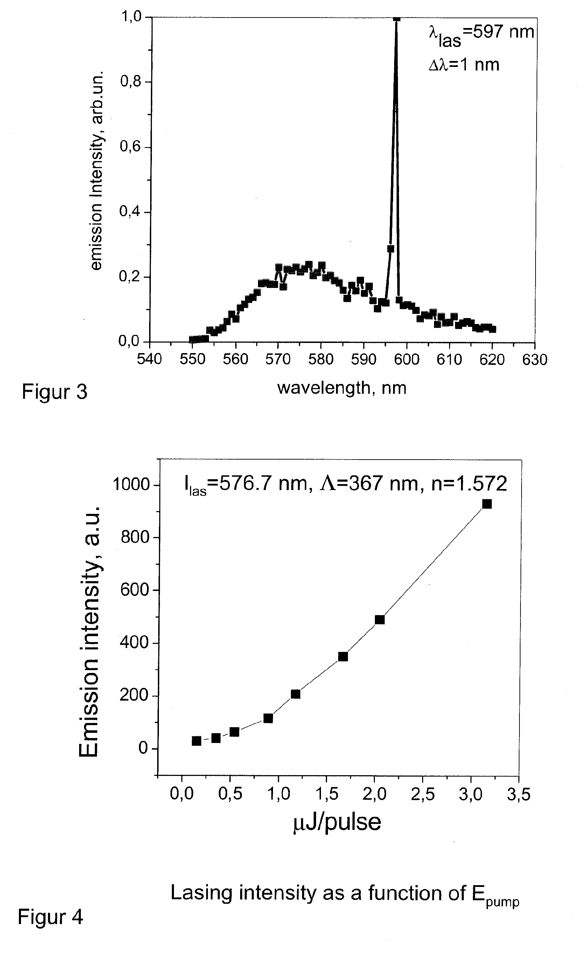

After appearance and growth of ASE (amplified spontaneous emission) intensity, a narrowing of the emitted light is observed. Thus, a sharp peak with high power (lasing) was observed, see **Figure 3.** This figure illustrates lasing within a grating of $\Lambda$ = 0.384 $\mu$m, wherein the width of the lasing line is ca. 1 nm.

Using a transmission grating made of the materials of this example and a grating period ranging from 364 up to 387 nm, the obtained lasing wavelength varies in the range of 565-606 nm. The lasing intensity is almost linearly dependent on the pumping beam energy, as outlined in **Figure 4** which illustrates the emitted lasing energy as a function of the pumping energy. The lasing threshold was determined as ca. 0.5-2 $\mu$J/cm$^2$.

**Claims**

1. A structure, having first areas consisting of or comprising a network of organic polymer material and second areas consisting of a nematic and/or smectic liquid crystal material, comprising at least one or more nematic and/or smectic liquid crystals and a photoluminescent material, wherein

   (a) the first and second areas alternate in at least a first plane, while the composition of the film is substantially invariable in at least one direction which is angular to the said first plane, or
   (b) second areas are completely surrounded by first areas, and the said areas are located in a periodic pattern,

   wherein the nematic and/or smectic liquid crystal material in the second areas extends in the longitudinal direction of the said areas from one end of the area to the other,
   the structure being arranged between two substrates, at least one of which is light transmitting.

2. A structure as claimed in claim 1, wherein the structure is in the shape of a film, arranged between the said substrates which are parallel to each other.

3. The structure of claim 1 or 2, wherein the two substrates are provided with transparent, preferably switchable electrodes.

4. The structure of any of the preceding claims, wherein the structure together with the substrates is flexible.

5. The structure of any of claims 1 to 4, in the form of a volume transmission, slanted, or reflection grating preferably in the Bragg regime or in the Raman Nath regime.

6. The structure of any of claim 1 to 5, wherein the first areas are **characterized by** an optical dielectric constant with a value that remains substantially constant when an electric field, a magnetic field or an electromagnetic field is applied thereon.

7. Method for the production of a structure according to any of claims 1 to 6, comprising the following steps:

   (a) providing a homogeneous and isotropic mixture, comprising at least a first component, consisting of one or more photocurable monomers and/or oligomers, a second component, consisting of one or more nematic and/or smectic liquid crystals, a third component, selected from one or more photoluminescent substances or materials, and further comprising a photoinitiator, if required or desired for photopolymerization of the photocurable monomers and/or oligomers,
   (b) filling said mixture into the space between two substrates, at least one of which being actinic light transmitting, and
   (c) irradiating at least one surface of the mixture with a light field in such a way that areas of the mixture are irradiated while others are not or substantially not, the irradiation having an intensity sufficiently low that under the irradiation, first areas being solely, substantially or mainly composed of photocured polymer form, while the one or more nematic and/or smectic liquid crystals and the one or more photoluminescent substances or materials, dissolved therein, at least partly escape into second areas.

8. Method according to claim 7, wherein the light field for irradiation has a periodical intensity distribution formed by two or more laser beams.

9. Method according to claim 8, wherein the light field is in the form of an interference pattern, preferably an amplitude (intensity gradient) pattern or a phase (polarization gradient) pattern.

10. Method according to claim 9, wherein irradiation is made as interference lithography (holographically) or using an amplitude or phase mask.

11. Method according to any of claims 7 to 10, wherein at least steps (a) and (c) are performed between 15 and 25°C, or wherein at least steps (a) and (c) are performed at temperature above room temperature, preferably between 40-80°C.

12. Method according to any of claims 7 to 11, wherein the intensity of irradiation is in the range of not more than 80 mW/cm$^2$, preferably of not more than 20 mW/cm$^2$.

13. Method according to any of claims 7 to 12, wherein said first component of the homogeneous and isotropic mixture is selected from one or more compounds of the group consisting of unsaturated monomers and oligomers, in combination with at least one thiol-compound, the compounds capable of reacting in a thiol-ene reaction, or is selected from one or more epoxy compound, or a combination of both.

14. Method according to any of claims 7 to 12, wherein said first component of the homogeneous and isotropic mixture is selected from the group consisting of hybrid organic-inorganic materials obtained using the sol-gel method.

15. Method according to any of claims 7 to 14, wherein the two substrates are provided with electrically switchable electrodes.

16. Use of the structure according to any of claims 1 to 6 as a DFB laser.

17. Use according to claim 16, wherein a pumping pulse laser light is adjusted to the position of the photoluminescent band of the laser substance and is applied perpendicularly (normally) or at an arbitary angle to the normal of the substrate, depending on the DFB cavity type.

18. Use according to claim 16 or 17, wherein application and/or removal of an electrical current through the film is used in order to switch the lasing emission in a range between its maximum and its minimum or zero, respectively.

19. Use according to any of claims 16 to 18, wherein an electrical voltage is applied through the film which is capable to tune the lasing wavelength into a spectral range above the maximum of the photoluminescent band of the laser substance, or wherein heat or mechanical stress is used to tune the lasing wavelength.

Figur 1

**Off - state**

Pumping beam

Lasing output

$n_{pol} \neq n_{LC}$

**On - state**

Pumping beam

Lasing output

Lasing electrical
switching/tuning

$n_{pol} \approx n_{LC}$

Figur 2a

lasing

pumping

Lens, f=55mm

Figur 2b

Figur 3

Lasing intensity as a function of $E_{pump}$

Figur 4

Europäisches
Patentamt

European
Patent Office

Office européen
des brevets

# EUROPEAN SEARCH REPORT

Application Number

EP 08 16 9354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VASNETSOV M V; BAZHENOV V YU; SLUSSARENKO S S; SAKHNO O; STUMPE J; ABBATE G: "First approach to the analysis of the lasing conditions in POLIPHEM<(c)> structures" MOLECULAR CRYSTALS AND LIQUID CRYSTALS, GORDON AND BREACH SCIENCE PUBLISHERS SA, vol. 488, 1 January 2008 (2008-01-01), pages 135-147, XP009110603 Switzerland | 1-6, 16-19 | INV. G02F1/1334 H01S3/063 H01S3/213 |
| Y | * page 136, paragraph 1 * * page 141, last paragraph - page 142, paragraph 1; figure 3 * * page 147 * | 7-15 | |
| Y | SAKHNO O ET AL: "POLIPHEM: new type of nanoscale polymer-LC-switchable photonic devices" PROCEEDINGS OF THE SPIE - THE INTERNATIONAL SOCIETY FOR OPTICAL ENGINEERING SPIE-INT. SOC. OPT. ENG USA, vol. 5521, no. 1, 2004, pages 38-45, XP002510319 ISSN: 0277-786X * the whole document * | 7-15 | |
| D,X | ABBATE G ET AL: "New generation of holographic gratings based on polymer-LC composites: POLICRYPS and POLIPHEM" MOLECULAR CRYSTALS AND LIQUID CRYSTALS GORDON & BREACH SWITZERLAND, vol. 453, 2006, pages 1-13, XP009110607 ISSN: 1058-725X * the whole document * | 1-19 | TECHNICAL FIELDS SEARCHED (IPC)<br><br>G02F<br>H01S |
| D,X | EP 1 612 596 A (FRAUNHOFER GES FORSCHUNG [DE]) 4 January 2006 (2006-01-04) * the whole document * | 1-19 | |

The present search report has been drawn up for all claims

| Place of search | Date of completion of the search | Examiner |
|---|---|---|
| Munich | 16 January 2009 | Frank, Wolfgang |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 16 9354

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2009

| Patent document cited in search report | | Publication date | Patent family member(s) | | Publication date |
|---|---|---|---|---|---|
| EP 1612596 | A | 04-01-2006 | WO | 2006002870 A1 | 12-01-2006 |
| | | | JP | 2008504580 T | 14-02-2008 |
| | | | US | 2008063808 A1 | 13-03-2008 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005006065 A, R. Caputo
- WO 2006002870 A
- US 5942157 A
- US 4517280 A, Okamoto
- US 3771065 A, Goldberg

**Non-patent literature cited in the description**

- **T.J. Bunning ; L.V. Natarajan ; V.P. Tondiglia ; R.I. Sutherland.** *Ann. Rev. Mater. Sci.,* 2000, vol. 30, 83
- **G. P. Crawford.** *Opt. Photonics News,* 2003, vol. 14, 54
- **R.L. Sutherland ; V.P. Tondiglia ; L.V. Natarajan ; T.J. Bunning.** *Appl. Phys. Lett.,* 2001, vol. 79, 1420
- **G. Abbate ; F. Vita ; A. Marino ; V. Tkachenko ; S. Slussarenko ; O. Sakhno ; J. Stumpe.** *Mol. Cryst. and Liq. Cryst.,* 2006, vol. 453, 1
- **O. Sakhno ; S. Slussarenko ; J. Stumpe.** *Proc. SPIE,* 2004, vol. 5521, 38
- **G. Abbate ; F. Vita ; A. Marino ; V. Tkachenko ; S. Slussarenko ; Ol Sakhno ; J. Stumpe.** *Mol. Cryst. And Liq. Cryst.,* 2006, vol. 453, 1
- **J.P. Dowling ; M. Scalora ; M.J. Bloemer ; C.M. Bowden.** *J. Appl. Phys.,* 1994, vol. 75, 1896
- **H. Kogelnik ; S. V. Shank.** *Appl. Phys. Lett.,* 1971, vol. 18, 152
- **Pakulski et al.** Fused silica masks for printing uniform and phase adjusted gratings for distributed-feedback lasers. *Appl. Phys. Lett.,* vol. 62 (3), 222-24
- **V.I. Kopp ; B. Fan ; H.K.M. Vithana ; A.Y. Ganack.** *Opt. Lett.,* 1998, vol. 23, 1707
- **A. Chanishvili ; G.Chilaia ; G. Petriashvili ; R. Barberi ; R. Bartolino ; G. Cipparone ; M. Mayyulla ; L.Oriol.** *Adv. Mater,* 2004, vol. 16, 791
- **T.-H. Lin ; Y.-J. Chen ; C.-H. Wu ; A. Y.-G. Fuh ; J.-H. Liu ; P.-C. Yang.** *Appl. Phys. Lett.,* 2005, vol. 86, 161120
- **G. Strangi.** Color-Tunable Organic Microcavity Laser Array Using Distributed Feedback. *Physical Review Letters,* 2005, vol. 94, 063903
- **R. Jakubiak ; T.J. Bunning ; R. A. Vaia ; L.V. Natarajan ; V.P. Tondiglia.** *Adv. Mater.,* 2003, vol. 15, 241
- **D.E. Lucchetta ; L. Criante ; O. Francescangeli ; F. Simoni.** *Appl. Phys. Lett.,* 2004, vol. 84, 837
- **V. K. Hsiao ; Ch. Lu ; G. S. He ; M. Pan ; A. N. Cartwrite ; P. N. Prasad ; R. Jakubiak ; R. A. Vaia ; T.J. Bunning.** *Opt. Expr.,* 2005, vol. 13, 3787
- **Y.J. Liu ; X.W. Sun ; P. Shum ; X.H. Yhang ; H.P. Li ; J. Mi ; W. Ji.** *J. Appl. Phys.,* 2006, vol. 45, L559
- **Y.J. Liu ; X.W. Sun ; P. Shum ; H.P. Li ; J. Mi ; W. Ji ; X.H. Zhang.** Low-threshold and narrow-linewidth lasing from dye-doped holographic polymer-dispersed liquid crystal transmission gratings. *Applied Physics Letters,* 2006, vol. 88, 061107
- **Y.J. Liu ; X.M.Sun ; H.i. Ellim ; W.Ji.** Effect of LC concentration on the lasing properties of dye-doped holographic polymer-dispersed LC transmission gratings. *Appl. Phys. Lett.,* 2007, vol. 90, 011109
- **R. Jakubiak ; V.P. Tondiglia ; L.V. Natarajan ; R. L. Sutherland ; P. Lloyd ; T.J. Bunning ; R.A. Vaia.** *Adv. Mater.,* 2005, vol. 17, 2807
- **V.I. Klimov.** Color-selective semiconductor nanocrystal laser. *Appl. Phys.Lett.,* 2002, vol. 80 (24), 4614-4616